# EUROPEAN PATENT SPECIFICATION

(11) **EP 2 801 397 B1**
(45) Date of publication and mention of the grant of the patent: **29.03.2017**
(21) Application number: 13167269.3
(22) Date of filing: 10.05.2013
(51) Int. Cl.: C10G 33/06, B01D 17/02

(54) **Method and system for in-depth oil conditioning**
Verfahren und System zur tiefgehenden Ölkonditionierung
Procédé et système de conditionnement d'huile en profondeur

(43) Date of publication of application: 12.11.2014
(73) Proprietor: Ocean Team Group A/S, 6700 Esbjerg (DK)
(72) Inventor: Thomsen, Jens Peter Høg, 6800 Varde (DK)
(74) Representative: Nielsen, Leif

(56) References cited:
- WO-A1-2010/066266
- US-A- 2 730 190
- US-A- 3 944 489
- US-A- 4 483 774
- US-A- 4 627 922
- US-A- 4 769 147
- US-A- 5 211 856

## Description

### Field of the Invention

The present relates to dehydrating and cleaning oil. Especially, the present invention relates to a method and apparatus where gas is introduced into the oil to form gas bubbles rising through the oil in the degassing device, while the gas bubbles are absorbing water vapor which, together with the gas in the bubbles, is released from the oil. The release is assisted by reducing the pressure.

### Background of the Invention

Oil Degradation is a widely known problem in small-scale machinery, for example in car motors, where oil change and filter shift is changed at specific service intervals to avoid problems with degradation. It is also known in large-scale machines, for example turbines, ship engines, and gas compressor lube oil systems; however, due to the large amount of oil, it is preferred to condition the oil instead of exchanging it.

The problem is described in greater detail in US patent No. 5211856 by Shen. US5211856 discloses a system for low-vacuum oil/water separation. Fully diffused purified gas is introduced into an oil/water mixture liquid in a low vacuum container, enabling the liquid to produce concentrated micro fine gas bubbles, enabling the liquid to be in a state of gas/liquid two-phase mixture. This greatly increases the surface area of the oil/water mixture liquid, speeding up the oil/water separation. The method is suitable for the purification of new oil, and adequate in the recovery, regeneration and purification of various waste lubrication oils, hydraulic oils, and transformer oils.

A different method and apparatus for separating water from oil is disclosed in US6382267, where a vacuum is created in a container so that oil which contains water and gas bubbles is drawn upward through a first section of the container. At the top of the first section, the oil impacts a baffle plate, thereby releasing water vapor. The oil then flows downward through an obstruction component in a second section of the container, thereby releasing additional water vapor.

The method in US6382267 has relatively high energy consumption due to the fact that, firstly, energy-expensive vacuum is produced for sucking the oil upwards through the container, and, secondly, the extraction pump for the cleaned oil has to work against the vacuum. Furthermore, it is pointed out that pumps that are used for creating such relatively strong reduction of pressure (vacuum) are of a type that is typically not allowed in areas with explosives, that is so-called ATEX classified zones, for example around petrol storage tanks.

US2730190, and US4627922 disclose degassing devices in which water is separated from oil by degassing devices by leading gas bubbles through the oil in order to absorb water.

Further degassing devices are disclosed in European patent application EP0115333 and US patent US4089662.

Despite substantial improvements already achieved in the art, there is a continuing effort in the field for further improvements, especially with respect to reduced energy consumption, efficiency and also including safety aspects. Also, the prior art pumping systems are not easy to scale for large facilities. Especially, when oil conditioning facilities are desired with large capacity, creation of vacuum for extraction of water from oil is a difficult task and implies large costs. It would therefore be desirable to provide a system for separating water from oil which is scalable to large capacities.

### Objective of the Invention

The objective of the present invention is to provide a method and system for oil/water mixture liquid separation with a high degree of control and efficiency. It is also an objective to reduce the energy consumption. A further aspect is high safety, for example in connection with areas classified as ATEX zones. In addition, the system should be scalable to large capacities.

### Description of the Invention

This objective is or these objectives are achieved with a method and an apparatus according to the following.

Oil that contains water is introduced into a degassing device, wherein the degassing device contains an upper volume filled with gas and a lower volume filled with oil up to an oil level. Gas, for example dried air, is introduced into the oil by a gas supply to form gas bubbles rising through the oil in the degassing device, while the gas bubbles are absorbing water vapor which, together with the gas in the bubbles, is released to the upper volume for discharge from the degassing device through an exhaust system connected to the upper volume. For example, the gas is introduced into the oil through a nozzle. Optionally, the gas is pressurized at least 0.1 bar above the pressure of the oil around the nozzle before introducing the gas into the oil to form gas bubbles; such overpressure assists in bubble expansion and increases the efficiency. For example, the oil has a pressure above atmospheric pressure, optionally 0.5 Barg, and the gas a higher pressure, optionally 0.7 Barg when being introduced. Optionally, the gas, such as dried air, is introduced at a temperature higher than the temperature of the oil.

Although, the oil is not pure oil but contains some degree of water, we will in the following for simplicity use the term oil, keeping in mind that the term also covers the liquid that is a mixture of oil and water and also contains gas, such as air, as well as particles.

For example, the degassing device comprises a first and a second degassing device, each having a lower volume that contains oil and being mutually fluid-flow connected; and each having an upper volume containing gas and being mutually fluid-flow connected and connected to the exhaust system. For example, the lower volumes of the first and the second degassing device are mutually connected by an oil pipe, wherein the oil pipe has a tube exit above the upper oil in the second degassing device, the tube exit being at level with the oil level in the first degassing device.

Advantageously, the oil is enriched with gas, such as air, before it is injected into athe first and second degassing device. The method comprises raising the oil level in the second degassing device for pressing gas out of the device through an exhaust, after which the oil level is decreased again for decreasing the pressure, which assists in extracting gas and vapour from the oil.

In more detail, the method comprises
- raising the oil level in the second degassing device from a predetermined lower level to a predetermined upper level by adding oil, which decreases the upper volume for the gas and presses gas from the upper volume out of the upper volume through the exhaust system;
- preventing backflow of gas from the exhaust system into the upper volume, for example by the exhaust system comprising a one-way mechanism, such as a check valve, for a one-way only transport of gas, the one way being away from the degassing device;
- when the oil level reaches the predetermined upper level, increasing the upper volume by lowering the oil level in the second degassing device to the lower predetermined level and thereby pulling gas from the upper volume of the first degassing device into the upper volume of the second degassing device and forcing the gas in the upper volumes of the first and the second degassing devices to expand, and thereby decrease the gas pressure; and
- using the decreased gas pressure for additional extraction of the gas bubbles and water from the oil.

For example a first pump is used for introducing oil into the first degassing device; and a second pump is used for extracting oil from the second degassing device for thereby causing a linear transport of oil from the first pump to the first degassing device, from the first to the second degassing device, and from the second degassing device to the second pump.

For example, the upper and lower predetermined levels are defined by an upper switch and a lower switch in the second degassing device for sensing an upper and lower oil level, respectively. The upper and lower switch are functionally connected to level adjustment means, the level adjustment means also being functionally connected to the first pump and the second pump and programmed to raise and lower the oil level between the two switches in alternation by differentially adjusting the flow rate of the first and second pump.

For example, a continuous flow of oil is provided through the degassing device. The flow rate from the first pump and the second pump are differentially adjusted in alternation such that the flow rate from the second pump is repeatedly shifted from being higher to being lower than the flow rate from the first pump. The shifting is caused by the oil level reaching the lower level and the upper level, respectively.

Optionally, the raising and lowering of the oil level for creating pressure reduction is performed in the second degassing device only. In this case, the second degassing device is used as a pump for creating a vacuum that increases the release of the bubbles from the oil in the first degassing device.

However, if the oil in the lower volume of the second degassing device also has an interface with the gas in the upper volume for release of gas and vapor from the oil of the lower volume into the gas in the upper volume through the interface, the second degassing device is also used for extracting gas from the oil that is in the lower volume of the second degassing device. In this case, the degassing device is a working with a two stage degassing action. The second degassing device functions as a pump for release of gas and vapour in both lower volumes of the first and second degassing device. Such a system does not require traditional vacuum pumps and does not suffer from being difficult to scale up for large facilities; by increasing the second degassing device and the oil pumps, the degassing capacity is increased. In comparison to prior art techniques, the method is scalable to large throughput of oil, for example 150-200 1/min or higher. Therefore, the apparatus and method is especially useful for medium sized and large systems, for example for cleaning the oil in gas turbine generators, such as used on offshore rigs, and oil in turbines for power plants or electrical transformers as well as in gas compressor lube oil systems. In order to reduce down time of the installation from which oil is extracted for cleaning, the system can be connected to the installation while running. For example, the oil is recirculated a number of times through the degassing device in order to achieve a high degree of cleaning and degassing. During the recirculation, the oil level is repeatedly raised and lowered between the upper level and lower level in alternation. Another advantage is that traditional vacuum pumps can be avoided, which makes the system useful for so-called ATEX areas, which are areas with explosive gases, for example gasoline tanks or offshore gas rigs.

Furthermore, if only the second degassing device is used for this pumping action by raising and lowering the oil level, the first degassing device can be better optimized with respect to gas release. Such optimization will be explained in greater detail below.

For example, oil is pumped by a first oil pump into the degassing device at a pressure of the oil above atmospheric pressure, which is in contrast to prior art systems configured for using vacuum to suck oil into the degassing device. For example, the pressure of the oil in the vessel is at least 0.5 Barg. Optionally, the method comprises pressurizing gas above atmospheric pressure before introducing the gas into the oil to form gas bubbles. For example, the pressurised gas has a pressure higher than the pressure of the oil in the vessel. The higher pressure creates a larger expansion than if the gas is introduced at the same pressure. Such larger expansion is beneficial for increasing the efficiency for water removal.

In concrete embodiments, oil that contains water is introduced into a vessel that is fluid-flow connected to an inlet of a first degassing device and caused to flow from the vessel through the inlet into the first degassing device. The cross section of the first degassing device is larger than the cross section of the inlet. For example, the cross section of the first degassing device immediately downstream of the inlet is larger than the cross section of the inlet. When the oil passes through the inlet, there will be space for expansion immediately downstream of the inlet, which assists in release of gas. Optionally, the vessel is a simple tube, for example connecting the inlet of the first degassing device with the first oil pump located upstream of the inlet of the first degassing device, the first oil pump pressing oil though the vessel and into the first degassing device.

For example, the first degassing device contains an obstruction component therein, and the method comprises causing the oil to pass at least part of the obstruction component, for example all of the obstruction component, during flow through the first degassing device, for example in an upwards direction through the first degassing device, and thereby spreading the oil around the obstruction component such that the surface area of the oil is increased. The obstruction component has a large area. For example, the obstruction component is a three dimensional mesh material or a volume filled with a granular material. An example is disclosed in the aforementioned US6383367.

Optionally, the second degassing device may contain an obstruction component, for example of a different type than the one in the first degassing device, and where the oil flow is downwards around the obstruction component. One possible obstruction component is a downwardly inclined annular disk where the oil flows downwards with increasing distance from the centre of the disk.

Gas is introduced into the oil for gas-enriching the oil. For example, the gas is introduced while the oil flows in the vessel towards the inlet of the first degassing device, although, in principle, the gas can also be introduced once the oil is inside the first degassing device. The gas forms gas bubbles, rising through the oil during upwards flow of the oil in the first degassing device. For example, the gas bubbles are microfine gas bubbles, as disclosed in US5211856. Such microfine gas bubbles can be obtained by pumping gas, such as dried air or other dry gas, through a microporous material, for example sintered metal or ceramics, press formed powdered plastics, or a multi-layered cloth. In the oil, the gas bubbles are absorbing water vapor from the oil and are released to the upper part of the first degassing device and exit the first degassing device in order to reduce the water content of the oil.

In contrast to the prior art, where the oil is spread around the obstruction component during the downward flow, an upwards flow pass the obstruction component implies a higher degree of control. Whereas the downward flow is mainly governed by gravity, the upwards flow, counteracting gravity, can be controlled by the pressure. A higher pressure yields a faster flow and a lower pressure a slower flow, such that the desired degree of spreading of the gas-enriched oil can be controlled by adjusting the pressure and, thereby, the flow. Adjustment of the degree of stretching of the oil not only implies a better control but also allows a tuning of the efficiency, for example in dependence n the oil temperature and viscosity, as different degrees of spreading imply different efficiencies with respect to gas/vapour release.

The above objective is also achieved with an apparatus according to the following. The apparatus comprises a vessel for transport of oil through the vessel; for example the oil is pumped by a pump that pumps oil with a pressure above atmospheric pressure. A gas supply is provided in the vessel for adding gas to the oil. A first degassing device with an inlet is fluid-flow connected to the vessel for receiving gas-enriched oil from the vessel and with an outlet for extraction of oil from the first degassing device. A gas exhaust, typically called a breather, is connected to the upper part of the first degassing device above the oil level. An obstruction component is provided in the first degassing device, the obstruction component being configured for increasing the surface area of the oil by spreading the oil around the obstruction component when the oil is passing the obstruction component in a flow through the first degassing device, for example in an upwards flow. Such an apparatus may be combined with one or more of the embodiments as described above and below.

The obstruction component has an upper end and a lower end. Optionally, the inlet is provided below the upper end of the obstruction component for flow of the oil from the inlet and pass at least part of the obstruction component, for example pass the entire obstruction component, during flow in an upwards direction through the first degassing device. Typically, the inlet of the first degassing device is provided below the obstruction component, although, this is not strictly necessary.

After passing the obstruction component, the oil is extracted from the first degassing device, for example from an overflow arranged above the obstruction component, or at least above the lower end of the obstruction component. Such an overflow constitutes the outlet of the first degassing device or is fluid-flow connected to the outlet of the first degassing device. However, the provision of the outlet above the obstruction component is not strictly necessary. Especially, in case that the obstruction component fills the entire first degassing device, the outlet would be provided below the upper end of the obstruction component.

In some embodiments, in order to create turbulence and increase water removal efficiency, the gas-enriched oil passes through a narrowing region before the gas-enriched oil enters the first degassing device. For example, the gas supply is provided at a first position in the vessel where the vessel has a first cross section, and the vessel has a second cross section, smaller than the first cross section, downstream of the first cross section. The decrease in cross section of the vessel causes compression of the gas and creates turbulence, leading to a better mixing of the gas bubbles and increased efficiency for take up of water. Once, the gas enters the first degassing device through the inlet, the expansion of the gas-enriched oil is more pronounced than without such a narrowing region. Alternatively, the inlet may be provided with a cross section that is smaller than the cross section of the vessel where the gas is provided. The passing of the narrowing inlet would create turbulence and compression/expansion over a small path length, increasing the efficiency of the water removal by the bubbles. In order to further increase the efficiency, the narrowing region in the vessel may be combined with a further narrowing inlet. As a further alternative, several narrowing regions and expansion regions may be provided in the vessel in order to create an alternation between compression and expansion.

In some embodiments, as already mentioned above, the transport of the oil through the first degassing device is not provided by vacuum suction but by pressure above atmospheric pressure. For example, a pressure may be created that is strong enough to press the oil through the vessel and upwards in the first degassing device. The advantage is lower energy consumption and easier as compared to lifting the oil in the first degassing device by vacuum. However, overpressure from upstream of the first degassing device and partial vacuum inside the upper part of the first degassing device can be combined. This partial vacuum can be of a degree that it substantially assists in pulling the oil upwards and at the same time efficiently removes released gases. For example, the pressure of the oil in the vessel is at least 0.5 bar above atmospheric pressure (=0.5 Barg), and the vacuum suction is less than 0.3 bar below atmospheric pressure. Alternatively, the upper part of the first degassing device is subjected to a low vacuum that is less than necessary for drawing the oil upwards through the first degassing device but still sufficiently high for effectively extracting evaporated gases from the first degassing device; for example a vacuum of less than 0.1 bar below atmospheric pressure. As a further alternative, no suction is provided in the exhaust system for pulling gas out of the degassing device.

In case of such low evacuation pressure, or in case of no suction at the exhaust in the upper part of the first degassing device, the pressure of the oil must be sufficiently high to press the oil through the vessel and through the inlet into the first degassing device and upwards in the first degassing device. This pressure is adjusted in dependence of the height to which the oil has to be lifted in the first degassing device in order to flow around the obstruction component, for example upwards around the obstruction component.

It has been found beneficial for improved efficiency to repeat the process of letting the oil become gas-enriched and pass the obstruction component, as each cycle removes further water from the oil. For this reason, in some embodiments, the vessel is connected to the downstream side of an oil reservoir for receiving oil from the oil reservoir and for feeding the first degassing device with this oil. On the other hand, the upstream side of the oil reservoir is connected to the outlet of the first degassing device for receiving oil from the first degassing device. In case that also a second degassing device is provided and connected to the downstream side of the first degassing device, the upstream side of the oil reservoir is connected to the outlet of the second degassing device. Thus, the vessel, the first degassing device and the second degassing device and the oil reservoir in fluid-flow connection are part of an oil circuit for repeated flow of the oil from the reservoir, through the pump and the vessel, through the first and second degassing device and the obstruction component, and back to the oil reservoir.

A typical level for satisfactory dehydration is a water content of less than 100 ppm. Not only is water removed from the oil but also other liquids that evaporate easier than oil are removed as well as other gases. For enrichment, typically, dried air is used, although other gases, for example nitrogen can be used as well. By degassing the oil, the flash point of the oil is expected to rise through the process and thereby improve safety aspects.

Typically, the temperature of the oil, when in the first degassing device, and optionally in the second degassing device, is typically between 50°C and 70°C. In order to keep this temperature, an oil heater can be provided to heat the oil. Especially, if the gas, such as air, is provided at a temperature below this temperature, heating of the oil is necessary.

For example, enrichment of the oil is made with gas, such as air, at a temperature of at least 20°, at least 30° or at least 40° less than the temperature of the oil. All degrees are given in terms of centigrade. An example is disclosed in US6383367, where the air may have a temperature of 20°C and the oil 60°C in order to cause increased expansion of the bubbles during enrichment. However, although this is beneficial for the efficiency of water removal, it implies a relatively high energy consumption due to the cooling of the oil by the air and the heating that is necessary to keep the oil at a temperature where the water evaporation is sufficient. In order to improve this situation, the gas, such as air, is introduced into the oil at heated conditions. For example, the gas, such as air, is provided at a temperature of not more than 20° or not more than 10° or not more than 5° less than the temperature of the oil. For example, the gas, such as air, has a temperature that is within 5° or 10° or 20° lower or higher than the temperature of the oil. Especially, if the introduced gas, such as dried air, has a temperature higher than the oil, external heating of the oil can be reduced, as the heated gas assists in keeping the temperature of the oil sufficiently high.

In order to keep the temperature of the oil at a proper level, the gas, such as air, can, alternatively, be used to supply thermal energy to the oil. In such case, the gas, such as air, is provided at a temperature higher than the temperature of the oil in the vessel. For example, the gas temperature for enrichment is at least 5° or at least 10° or at least 20° higher than the temperature of the oil.

In order to increase the efficiency for dehydration, the gas is used for enrichment in a dry state. For example, the gas is subject to drying before enrichment of the oil.

The oil may also be subject to filtration by oil filters of different pore size, such that particles and other agents causing oil degradation are removed. Also removed by filtering are particles of hardened oil and sludge flowing with the oil.

To improve the dehydration process there may be pumped clean and dry air onto the top of the oil reservoir in the installation to which the apparatus is connected. Top of the oil reservoir is defined as above oil level and to the top of the oil reservoir. This is done in order to improve the dehydration by removing humid air from above the oil level in the oil reservoir. The air can be removed by pressing the air out through the normal breather. The breather is normally placed at the top of the oil reservoir.

### Description of the Drawing

This invention will be described in relation to the drawings, where:
- FIG. 1: shows a schematic diagram of a circulating system;
- FIG. 2: is a sketch of the first degassing device with the obstruction component;
- FIG. 3: is a sketch of a second degassing device.

### Detailed Description of the Invention

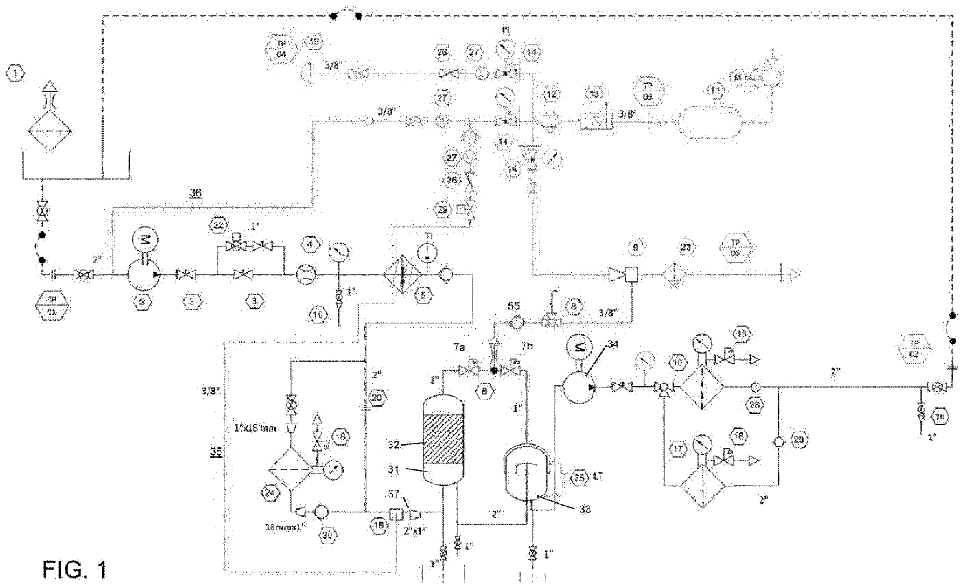

FIG. 1 is a diagram of an oil dehydration circuit. For example, such a circuit is installed on a platform or in a cargo container for connection to oil transport lines from which oil is received for dehydration and to which oil is delivered in dehydrated state.

Oil is received at connection point TP01 from an oil reservoir 1. Examples of such oil reservoirs are found in gas compressor lube oil systems, turbines for power production on offshore platforms, turbines from onshore power plants and transformer stations. The oil as received at connection point TP01 is pumped by motorised pump 2 through valve 3, passing flow meter 4 for flow control, and into heater 5 in order for the oil to be heated to a working temperature, typically between 50°C and 70 °C. After heater 5, the oil passes an orifice 20 on its way to the first degassing device.

A very fine filter 24 for removing particles in the oil is used towards the final decontamination process, for the use the corresponding valve is opened such that oil can flow into this so-called kidney loop bypassing some of the oil around orifice 20. A non-limiting example of such flow through the kidney loop is 40 litre/minute. The flow through the kidney loop is much less than through the orifice 20, for example only 20%. After having passed a check valve 30, the flow is connected to the main stream from orifice 20 again. Filtration through filter 24 can be switched on and off, depending of conditioning stage of the oil.

After having passed a check valve 30, air is introduced into the oil by an air injection nozzle 15, after which the tube size is reduced, for example from 2 inch to a 1 inch tube, in order to create turbulence and compress the provided air in the oil. The created turbulent pressure is released when the oil enters the first degassing device 31 at the bottom and flows upwards in the first degassing device 31 and around an obstruction component 32, for example during the upwards flow. For example, the obstruction component 32 is a three dimensional net material or a volume filled with a granular material.

After having passed the obstruction component and released gas and water vapour in the first degassing device 31, oil is extracted from the first degassing device 31 and transferred to a second degassing device 33. A level transmitter 25 is used for checking and controlling the oil level in the second degassing device 33. The oil is then pumped by pump 34 selectively through a first contamination filter 10 or a second contamination filter 17 with different filtration pore sizes. For example, the oil filtered with a coarse filter first and after a further cycle through the system, the oil is filtered with a fine filter. A pair of check valves 28 assures the correct direction for the flow, and oil gas separators 18 release gas and vapour originally resident in the filter at these filtration stages 10, 17. At connection point TP02, the oil leaves the apparatus and is recycled back to the oil reservoir 1. For example, the oil will pass the degassing devices 31, 33 several times, such as 7 times, for each filtration step, such as course filtration during the first 7 cycles, fine filtration during 7 following cycles and 7 cycles with ultra fine filtration. In each of these cycles, gas and vapour is removed as well.

At the upper part of the first degassing device 31 and the second degassing device 33, an exhaust system 6 is used for gas/vapour release. This release may optionally be assisted by weak vacuum in order to provide a proper flow. The term "weak vacuum" implies that the vacuum force in the first degassing device 31 and the second degassing device 33 is not enough to cause the oil to flow up in the first degassing device 31 to a level at the top of the obstruction component 32. For example, the pressure from the vacuum in the exhaust system is between 0.05 and 0.3 bar lower than atmospheric pressure. The upwards flow of the oil in the first degassing device 31 is caused mainly by the first pump 2 which exerts pressure on the oil, the pressure being above atmospheric pressure.

Air for the enrichment of gas is provided at the air injection nozzle 15, receiving air from an air circuit through an air supply tube 35. The air circuit receives pressurised air from an air tank 11 at connection point TP03. This air flows through filter 13 and is dried in a dryer 12, after which the air supply is branches into three branches with pressure regulators 14: an upper branch, a lower branch and a medial branch. The upper branch leads air through flow metre 27 and flow regulation valve 26 to a connection point TP04, from which dried air can be released to the oil reservoir in order to create a dry atmosphere above the oil and for taking up moisture from the surface of the oil before being released through a breather in the oil reservoir. The lower branch leads to an injection pump 9 which by using a venturi principle creates the weak vacuum in the exhaust system 6, before the air is released at connection point TP05. The medial branch divides further into air supply tube 35, for providing heated air to the air injection nozzle 15, and into air flush tube 36. The air flush tube 36 is used after conditioning of the oil in order to press the remaining oil out of the system before final cleaning of the system.

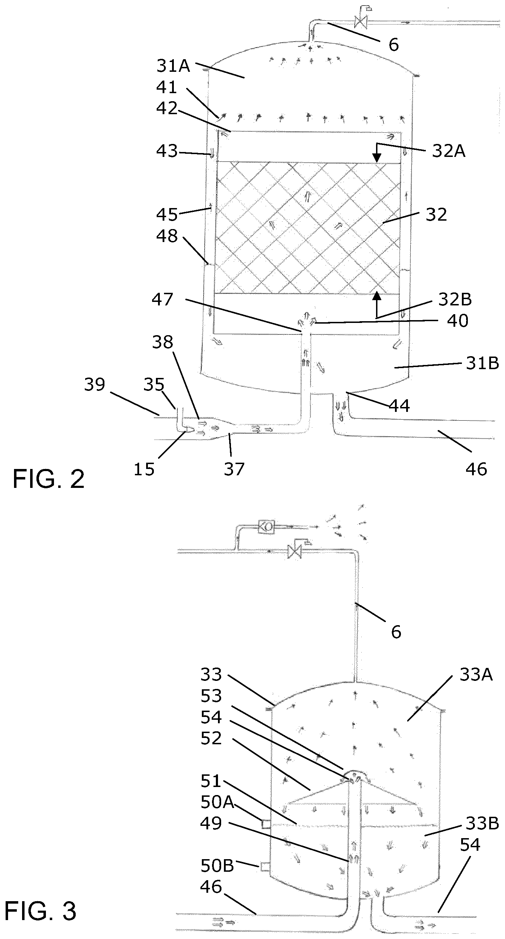

In FIG. 2, the first degassing device 31 with the obstruction component 32 is shown in greater detail. In a vessel 39, oil is flowing, as indicated by arrows 38, by pumping action towards the inlet 47 of the first degassing device 31 after having been heated in heater 5. From the air supply tube 35, air is injected into the flowing oil through air injection nozzle 15 after also having been heated in heater 5. Advantageously, such air is introduced as micro-sized droplets through a sintered material. Pressurised air, thus, resembles a fine spray in the oil.

Downstream of the injection nozzle 15, a narrowing region 37 is provided which leads to a compression of the gas in the oil before expansion at the inlet 47, as the first degassing device 31 has a cross section that is larger than the cross section of the inlet 47. In the drawing, the cross section of the inlet 47 is measured in a horizontal plane as well as the cross section of the first degassing device 31. However, a different arrangement with an inlet 47 not arranged at the bottom may require the cross section to be measured in a plane different from horizontal. The way of measuring is typically not important, essential in this respect is the fact that the change in cross section leads to a sudden expansion.

From the inlet 47 of the first degassing device 31, oil flows upwards in the first degassing device 31, as indicated by arrows 40. During the upwards flow, the oil passes the obstruction component 32 and will be stretched on the surface of the obstruction component 32, leading to release of gas, indicated by arrows 41, towards the top 31A of the first degassing device 31. After having passed the upper end 32A of the obstruction component 32, the oil reaches and overflow 42 and changes direction of flow downwards, as indicated by arrows 43. During this flow downwards, still some gas is released and will flow upwards as indicated by the arrows 45 directed upwards. The oil flows downwards into the lower part 31B of the first degassing device 31.

From the lower part of the first degassing device 31, the oil is extracted through first degassing device outlet 44 into an outlet tube 46. Depending on the extraction, the oil level is regulated. As indicated, the level 46 of the oil in the first degassing device 31 is kept between the lower end 32B and the upper end 32A of the obstruction component 32. From this outlet tube 46, the oil may be recirculated for further cleaning cycles.

A second degassing device 33 is used as a vacuum pump and in order to increase the effect. This degassing device is shown in greater detail in FIG. 3. The input line 49 is connected to the outlet tube 46 of the first degassing device 31. It transports the oil that comes from the first degassing device 31 in an upwards direction through an inlet 56 against a baffle plate 53 which turns the flow of the oil onto a conical expansion disc 52, which leads to an expansion of the oil during flow thereof, whereby additional gas is released towards the top of the second degassing device 32 in order to be captured by the exhaust system 6. The level 51 of the oil in the second degassing device is kept between the locations of two switches 50A, 50B. In operation, oil is pumped through the vessel 39 and the inlet 47 into the first degassing device 31, through the obstruction component 32, and over the overflow 42. By gravity, the oil flows down into the lower part 31B of the first degassing device 31 out of the outlet 44 through the outlet tube 46 and into the input line 49 of the second degassing device 33, out through the tube exit 54 and against the baffle 53, down the conical expansion disc 52 and into the lower part of the second degassing device 33. Due to the oil-flow connection between the outlet 44 of the first degassing device 31 and the input line 49, and due to the pressure-equalizing connection of the first degassing device 31 with the second degassing device 33 by the exhaust system 6, the level 48 in the first degassing device 31 will be constant and in level with the tube exit 54 at the upper end of the input line 49. The level of oil in the second degassing device 33 is kept between the locations of two switches 50A, 50B. If the level rises to the upper level 50B, a second pump 34 will pump out oil from the second degassing device 33 at a rate that keeps the oil level beneath the upper switch 50B.

In order to extract gas and vapour efficiently, it is an advantage to create vacuum in the upper part 31A of first degassing device 31 and second degassing device 33, as the vacuum assists in extracting the gas. However, if the apparatus is used in areas that are classified as having explosive atmospheres, so called ATEX classified areas, for example around petrol tanks, normal, motor-driven vacuum pumps are not allowed, but special equipment is required. For this reason, a pump 9 constructed according to venturi principles, is advantageous. On the other hand, such pumps typically only have a low flow rate, why it is not useful for creating large pressure drop quickly and efficiently in large tanks. The first degassing device 31 and the second degassing device 33, however, have relatively large gas volumes, for example in the order of 50-150 litre.

In order to solve this problem, the following method is used. As a first step, oil is pumped by the first pump 2 at a first flow rate through first degassing device 31 and into the second degassing device 33; and the extraction of oil from the second degassing device 33 through the tube exit 54 by second pump 34 is kept at a second flow rate, which is lower that the first flow rate in order to raise the oil level in the second degassing device 33. With respect to the combination of the first degassing device 31 and the second degassing device 33, more oil is pumped into the combination 31, 33 than out of the combination 31, 33 at this stage. During raising of the oil level in the second degassing device 33, the gas-filled volume above the oil in the second degassing device 33 decreases, pressing gas and vapour out of the second degassing device 33 into exhaust system 6 pass valve 7b for release through the check valve 55.

Once, the oil level in the second degassing device 33 reaches the upper switch 50A, the flow rates in and out of the combination 31, 33 are changed such that the flow rate out of the second degassing device 33 by second pump 34 is higher than the flow rate into the first degassing device 31 by the first pump 2. For example, the flow rate by the second pump 34 is increased or the flow rate from the first pump 2 is decreased or halted or a combination thereof. While the flow rate out of the combination 31, 33 of the first degassing device 31 and the second degassing device 33 is larger than the inflow of oil, the oil level in the second degassing device 33 falls, increasing the volume of gas above the oil in the second degassing device 33. Due to this increase in this gas volume, the pressure will fall, because the check valve 55 prevents backflow of gas. During the operation of lowering the oil level in the second degassing device 33, the two valves 7a, 7b of the exhaust system 6 are open. Thus, the pressure reduction in the second degassing device 33 is transferred to a likewise pressure reduction in the first degassing device 31 without changing the level of 48 oil in the first degassing device 31. Once, the oil level reaches the level of the lower switch 50B, the procedure is reversed again, and repeated cyclic for a number of times.

The fall in pressure in the combination 31, 33 assists in extracting gas and vapour from the oil in the first degassing device 31 and the second degassing device 33 without use of any external vacuum pump. Due to the check valve 55, merely witching between an upper and lower oil level in the second degassing device 33 creates a vacuum that assists in extracting gas and vapour from the oil. This is especially so, if the adding of gas through injection nozzle 15 is halted, and possibly even the flow of oil into the first degassing device 31 is also halted, until the oil level in second degassing device 33 should be raised again. However, it may be preferred to merely change the flow rates of the first pump 2 and second pump 34 such that in alternation the first pump shifts between having a higher and a lower flow rate relatively to the second pump. Thus, there is a continuous flow through the two degassing devices 31, 33, however, the flow is differentiated such that the oil level 51 in the second degassing device 33 raises and falls in alternation.

Even the vacuum pump 9 could be avoided and the gas released through the check valve 55 into atmosphere. However, the pump 9 may be used in order to lead the gas and vapour from the first degassing device and second degassing device away from an ATEX area.

For example, the gas volume above the oil is 100 litre in the second degassing device 33 when the oil is lowest and a volume of 50 litre when the oil is highest. In the first degassing device, this volume is constant 50 litre to both valves 7a, 7b being open and because the oil level in the first degassing device 31 is defined by the upper end of the input line 49 in the second degassing device 33. Thus, the total volume change by lowering the oil from the uppermost level at switch 50A to the lower most level at switch 50b is 50 litre as compared to the total maximum gas volume of 150 litre (50 litre in first degassing device 31 and 100 litre in the second degassing device 33), yielding an achievable vacuum of up to 33%, thus, about 0.33 bars below atmospheric pressure. The finally achieved pressure reduction in practice, however, depends on how rapid gas and vapour are released from the oil during level change in the second degassing device 33. A rapid release of gas from the oil during vacuum creation by lowering the oil level would prevent the vacuum from dropping this much - which is actually the aim of the invention, as degassing of the oil is the objective.

It should be pointed out that a prerequisite for this procedure is the differential pumping with a first pump 2 pumping oil into the combination 31, 33 of the first degassing device 31 and the second degassing device 31, and a second pump 34 pumping oil out of the second degassing device 33. This implies that an apparatus as disclosed in US6393367 cannot be used due to the lack of the first pump that is pumping oil into the system; instead the system in US6393367 is based on vacuum to draw the oil into the system, requiring a powerful vacuum pump.

### ASPECTS

In the following, further inventions fulfilling the objective are presented in the form of aspects. These aspects can be combined with one or more of the various embodiments described above.
Aspect 1. A method for separating water from oil, the method comprising:
   - introducing oil that contains water into a vessel (39) that is fluid-flow connected to an inlet (47) of a first degassing device (31); causing the oil to flow from the vessel (39) through the inlet (47) into the first degassing device (31), wherein the cross section of the first degassing device (31) is larger than the cross section of the inlet (47); wherein the first degassing device (31) contains an obstruction component (32) therein, and the method comprises causing the oil to pass the obstruction component (32), for example in an upwards direction, and thereby spreading the oil around the obstruction component (32) such that the surface area of the oil is increased;
   - introducing gas into the oil to form gas bubbles rising through the oil during up-wards flow (40) of the oil in the first degassing device (31), while the gas bubbles are absorbing water vapour which, together with the gas in the bubbles, are released (41) to the upper part (31A) of the first degassing device (31) and exit the first degassing device in an exhaust system (6).
Aspect 2. A method according to aspect 1, wherein the method comprises introducing the gas into the oil for gas-enriching the oil while the oil flows (38) in the vessel (39) towards the inlet (47).
Aspect 3. A method according to aspect 2, wherein the method comprises passing the gas enriched oil through a narrowing region (37) before the gas-enriched oil enters the first degassing device (31), for example a narrowing region (37) in the vessel upstream of the inlet (47); or the narrowing region is provided by the inlet having a smaller cross section than the vessel.
Aspect 4. A method according to any preceding aspect, wherein the oil and the gas are pressurized above atmospheric pressure.
Aspect 5. A method according to aspect 4, wherein the pressure of the oil in the vessel (39) is at least 0.5 Barg.
Aspect 6. A method according to aspect 4 or 5, wherein the pressure of the oil is sufficiently high to press the oil through the vessel (39) and upwards in the first degassing device (31) pass the obstruction component (32).
Aspect 7. A method according to any one of the aspects 4-6, wherein the method comprises pumping the oil through the vessel (39) and through the inlet (47) into the first degassing device (31) and by the pump (2) creating pressure on the oil above atmospheric pressure, pressing the oil upwards through the first degassing device (31) to pass the obstruction component (32) in an upwards direction.
Aspect 8. A method according to any one of the aspects 4-7, wherein the method comprises subjecting the upper part of the first degassing device (31) to a vacuum for extracting evaporated gases from the first degassing device, the vacuum being less than necessary for drawing the oil upwards through the first degassing device (31).
Aspect 9. A method according to any preceding aspect, wherein the method comprises, after the oil passing the obstruction component (32) in an upwards direction, extracting the oil from an overflow (42) arranged above a lower end (32B) of the obstruction component (32).
Aspect 10. A method according to any preceding aspect, wherein the method comprises heating the gas above the temperature of the oil before introducing the gas into the oil.
Aspect 11. An apparatus for a method according to any preceding aspect, the system comprising:
   - a vessel (39) for transport (38) of oil through the vessel;
   - a gas supply (15) provided in the vessel (39) for adding gas to the oil;
   - a first degassing device (31) with an inlet (47) fluid-flow connected to the vessel (39) for receiving gas-enriched oil from the vessel (39) and with an outlet (44) for extraction of oil from the first degassing device (31);
   - an exhaust (6) connected to the upper part (31A) of the first degassing device (31);
   - an obstruction component (32) in the first degassing device (31), the obstruction component (32) configured for increasing the surface area of the oil by spreading the oil around the obstruction component (32) when the oil is passing the obstruction component in a flow (40) through the first degassing device (31); the obstruction component (32) comprising an upper end (32A) and a lower end (32B); wherein the inlet (47) is provided below the upper end (32A) of the obstruction component (32) for flow of the oil from the inlet (47) and pass at least part of the obstruction component (32) the obstruction component (32) during flow in an up-wards direction (40) through the first degassing device (31).
Aspect 12. An apparatus according to aspect 11, wherein the vessel (39) is fluid-flow connected to a first pump (2) arranged upstream of the inlet (47), the pump (2) being configured for pumping oil into the vessel (39) towards the inlet (47) of the first degassing device (31) at a pressure above atmospheric pressure.
Aspect 13. An apparatus according to aspect 11 or 12, wherein the vessel (39) is connected to the downstream side (TP01) of an oil reservoir (1) for receiving oil from the oil reservoir (1); and wherein the upstream side (TP02) of the oil reservoir is connected to the outlet (44) of the first degassing device (31) for receiving oil from the first degassing device (31); wherein the vessel (39), the first degassing device (31) and the oil reservoir (1) in fluid-flow connection are part of an oil circuit for repeated flow of the oil from the reservoir (1), through the pump (2) and the vessel (39), through the first degassing device (31) and the obstruction component (32), and back to the oil reservoir (1).
Aspect 14. An apparatus according to anyone of the aspects 11-13, wherein an overflow (42) is provided above the lower end (32B) of the obstruction component (32) for receiving oil after having passed at least part of the obstruction component (32) in an upwards flow (40), the overflow (42) being fluid-flow connected to the outlet (44) of the first degassing device (31).
Aspect 15. An apparatus according to anyone of the aspects 11-14, wherein the inlet (47) of the first degassing device (31) is provided below the upper end (32A) of the obstruction component (32).
Aspect 16. An apparatus according to anyone of the aspects 11-15, wherein the gas supply (15) is provided at a first position in the vessel (39) where the vessel (39) has a first cross, wherein
   - either the vessel (39) has a narrowing (37) with a second cross section, smaller than the first cross section, downstream of the first cross section,
   - or the first cross section is larger than the cross section of the inlet (47),
   - or both.

### NUMBER LIST

- 1: oil reservoir
- 2: pump and electrical motor, for example ATEX approved
- 3: globe valve
- 4: flow meter, for example 0-300 l/min
- 5: electrical heater, for example ATEX approved
- 6: dehydration and degas system
- 7: oil-gas separator
- 8: atmospheric gas breather valve
- 9: vacuum generator
- 10: contamination filter
- 11: air compressor, for example with flow of more than 100 l/min
- 12: air dryer
- 13: air supply with filter and separator
- 14: air pressure regulator
- 15: air injection nozzle
- 16: oil sample and air purge
- 17: oil contamination filter
- 18: oil-gas separator
- 19: air purge oil reservoir
- 20: orifice, for example with a 25 mm diameter
- 22: pneumatic control valve
- 23: oil separator
- 24: filter, for example 1 micron, 40 l/min
- 25: level transmitter
- 26: flow regulation valve
- 27: flow meter
- 28: check valve, for example 0.5 bar, min 200 l/min
- 29: electrically controlled valve
- 30: check valve, for example 0.5 bar, min 40 l/min
- 31: first degassing device
- 31A: upper part of first degassing device
- 31B: lower part of first degassing device
- 32: obstruction component
- 32A: upper end of obstruction component
- 32B: lower end of obstruction component
- 33: second degassing device
- 34: pump
- 35: air supply tube
- 36: air flush tube
- 37: narrowing region of vessel 39
- 38: flow of oil in vessel 39
- 39: vessel
- 40: flow of oil from inlet upwards towards obstruction component
- 41: flow of gas upwards towards exhaust system 6
- 42: overflow
- 43: flow of oil downwards from overflow 42
- 44: outlet of the first degassing device 31
- 45: upwards flow of air
- 46: outlet tube of the first degassing device 31
- 47: inlet of the first degassing device 31
- 48: oil level in first degassing device 31
- 49: input line for second degassing device
- 50A: upper oil level switch
- 50B: lower oil level switch
- 51: oil level in second degassing device
- 52: conical expansion disc
- 53: baffle plate
- 54: tube exit of input line 49
- 55: check valve for gas exhaust from first degassing device 31
- 56: inlet of second degassing device (33)

## Claims

1. A method for separating water from oil, the method comprising:
- introducing oil that contains water into a degassing device (31, 33), wherein the degassing device (31, 33) contains an upper volume (31A, 33A) filled with gas and a lower volume (33B) filled with oil up to an oil level (51),
- introducing gas into the oil to form gas bubbles rising through the oil in the degassing device (31, 33), while the gas bubbles are absorbing water vapor which, together with the gas in the bubbles, is released to the upper volume (31A, 33A) for discharge from the degassing device (31, 33) through an exhaust system (6) connected to the upper volume (31A, 33A), **characterized in that** the degassing device (31,33) comprises a first (31) and a second (33) degassing device, each having a lower volume (31B, 33B) containing oil and being mutually fluid-flow connected, and each having an upper volume (31A, 33A) containing gas and being mutually fluid-flow connected and connected to the exhaust system (6); wherein the method comprises
- raising the oil level (51) in the second degassing device (33) from a predetermined lower level (50B) to a predetermined upper level (50A) by adding oil, which decreases the upper volume (31A, 33A) for the gas and presses gas from the upper volume (31A, 33A) out of the upper volume (31A, 33A) through the exhaust system (6);
- preventing backflow of gas from the exhaust system (6) into the upper volume (31A, 33A);
- when the oil level reaches the predetermined upper level (50A), increasing the upper volume (31A, 33A) by lowering the oil level (51) in the second degassing device to the lower predetermined level (50B) and thereby pulling gas from the upper volume (31A) of the first degassing device (31) into the upper volume (33A) of the second degassing device (33) and forcing the gas in the upper volumes (31A, 33A) of the first and the second degassing devices (31, 33) to expand, and thereby decrease the gas pressure; and
- using the decreased gas pressure for additional extraction of the gas bubbles and water from the oil in the first and second degassing devices (31, 33).

2. A method according to claim 1, wherein the method comprises introducing gas into the oil to form gas bubbles during the raising of the oil level (51) but halting introduction of gas into the oil during lowering of the oil level (51).

3. A method according to claim 1 or 2, wherein the method comprises introducing oil that contains water into a vessel (39) that is fluid-flow connected to an inlet (47) of a the degassing device (31); causing the oil to flow from the vessel (39) through the inlet (47) into the degassing device (31), wherein the oil is pumped by a first oil pump (2) through the vessel (39) at a pressure of the oil in the vessel (39) of at least 0.5 Barg and pumped into the degassing device (31).

4. A method according to claim 3, wherein the method comprises pressurizing gas above the oil pressure before introducing the gas into the oil to form gas bubbles.

5. A method according to any preceding claim, wherein the method comprises with a first pump (2) pumping oil into the first degassing device (31) and with a second pump (34) extracting the oil from the second degassing device (33) for thereby causing a linear transport of oil from the first pump (2) to the first degassing device (31), from the first (31) to the second (33) degassing device, and from the second degassing device (33) to the second pump (34).

6. A method according toany preceding claim, wherein the raising and lowering of the oil level for creating pressure reduction is performed in the second degassing device (33) only.

7. A method according to claim 5or 6, wherein the method comprises causing the oil to flow from the second pump (34) to the first pump (2) and thereby recirculating the oil a number of times through the degassing device (31, 33); during the recirculation, repeatedly raising and lowering the oil level (51) between the upper level (50A) and lower level (50B) in alternation.

8. A method according to claim 7, wherein the method comprises causing a continuous flow of oil through the degassing device (31, 33) and differentially adjusting the flow rate from the first pump (2) and the second pump (34) in alternation such that the flow rate from the second pump (34) is repeatedly shifted from being higher to being lower than from the first pump (2), the shifting being caused by the oil level (51) reaching the lower level (50B) and the upper level (50A), respectively.

9. A method according to any preceding claim, wherein the first degassing device (31, 33) contains an obstruction component (32, 52) therein, and the method comprises causing the oil to pass at least part of the obstruction component (32, 52) during flow in an upwards direction (40) and thereby spreading the oil around the at least part of the obstruction component (32, 52) such that the surface area of the oil is increased.

10. A method according to any preceding claim, wherein the method comprises introducing oil that contains water into a vessel (39) that is fluid-flow connected to an inlet (47) of a the degassing device (31); causing the oil to flow from the vessel (39) through the inlet (47) into the degassing device (31), wherein the cross section of the degassing device (31) immediately downstream of the inlet (47) is larger than the cross section of the inlet (47); wherein the method comprises introducing gas into the oil to form gas bubbles in the vessel upstream of the inlet (47).

11. A method according to claim 10, wherein the method comprises after introducing gas into the oil, passing the gas-enriched oil through a narrowing region (37) where the cross section of the flow is reduced before the gas-enriched oil enters the degassing device (31).

12. An apparatus for a method according to any preceding claim, the apparatus comprising:
- a first (31) and a second (33) degassing device, each having a lower volume (31B, 33B) containing oil and being mutually fluid-flow connected, and each having an upper volume (31A, 33A) containing gas and being mutually fluid-flow connected;
- an exhaust system (6) connected to the upper volume (31A, 33A) and comprising a one-way mechanism (55) for a one-way only transport of gas, the one way being away from the degassing device (31, 33);
- a first pump (2) for introducing oil into the first degassing device (31) and a second pump (34) for extracting oil from the second degassing device (33) for thereby causing a linear transport of oil from the first pump (2) to the first degassing device (31), from the first (31) to the second (33) degassing device, and from the second degassing device (33) to the second pump (34).
- an upper switch (50A) and a lower switch (50B) in the second degassing device (339 for sensing an upper and lower oil level, respectively, in the second degassing device (33), wherein the upper (50A) and lower switch (50B) are functionally connected to level adjustment means, the level adjustment means also being functionally connected to the first pump (2) and the second pump (34) and programmed to raise and lower the oil level between the two switches (50A and 50B) in alternation by differentially adjusting the flow rate of the first (2) and second pump (34);
- a gas supply for introducing gas into the oil to form gas bubbles rising through the oil in the degassing device (31, 33), while the gas bubbles are absorbing water vapor which, together with the gas in the bubbles, is released to the upper volume (31A, 33A) for discharge from the degassing device (31, 33) through the exhaust system (6).

13. An apparatus according to claim 12, wherein the lower volumes (31A, 33A) of the first (31) and the second (33) degassing device are mutually connected by an oil pipe (46, 49), wherein the oil pipe (46, 49) has a tube exit (54) above the upper oil level (50A) in the second degassing device (33), the tube exit (54) being at level with the oil level in the first degassing device (31).

14. An apparatus according to claim 12 or 13, further comprising a vessel (39) fluid-flow connected to a first pump (2) for transport (38) of oil to an inlet (47) of the first degassing device (31); wherein the cross section of the first degassing device (31) is larger than the cross section of the inlet (47); a gas supply (15) provided in the vessel (39) for adding gas to the oil to create gas bubbles in the oil; wherein the pump (2) is configured for pumping oil into the vessel (39) towards the inlet (47) of the first degassing device (31) at a pressure above atmospheric pressure

15. An apparatus according to anyone of the claims 12-14, wherein the gas supply (15) is provided at a first position in the vessel (39) where the vessel (39) has a first cross section, wherein
- either the vessel (39) has a narrowing (37) with a second cross section, smaller than the first cross section, downstream of the first cross section,
- or the first cross section is larger than the cross section of the inlet (47),
- or both.

16. An apparatus according to anyone of the claims 12-15, wherein an obstruction component (32) is provided in the first degassing device (31); the obstruction component (32) being configured for increasing the surface area of the oil by spreading the oil around the obstruction component (32) when the oil is passing the obstruction component in a flow (40) through the first degassing device (31); the obstruction component (32) comprising an upper end (32A) and a lower end (32B), wherein the inlet (47) is provided below the upper end (32A) of the obstruction component (32) for flow of the oil from the inlet (47) and pass at least part of the obstruction component (32) during flow in an upwards direction (40) through the first degassing device (31).

## Patentansprüche

1. Ein Verfahren, um Wasser von Öl zu trennen, wobei das Verfahren folgendes umfasst:
- Einführen von Wasser enthaltendem Öl in eine Entgasungsvorrichtung (31, 33), wobei die Entgasungsvorrichtung (31, 33) ein mit Gas gefülltes oberes Volumen (31A, 33A) und ein unteres Volumen (33B), dass mit Öl bis zu einem Ölstand (51) gefüllt ist, enthält
- Einführung von Gas in das Öl um Gasblasen zu bilden, die durch das Öl in der Entgasungsvorrichtung (31, 33) aufsteigen, wodurch die Gasblasen Wasserdampf absorbieren, welcher zusammen mit den Gasblasen in das oberen Volume (31A, 33A) abgegeben wird zur Freigabe aus der Entgasungsvorrichtung (31, 33) durch ein Abgassystem (6), dass mit dem oberen Volumen (31A, 33A) verbunden ist, **dadurch gekennzeichnet, dass** die Entgasungsvorrichtung (31,33) eine erste (31) und eine zweite (33) Entgasungsvorrichtung umfasst, die jeweils ein unteres, Öl enthaltendes Volumen (31A, 33A) haben, welche miteinander fluid-strömungsverbunden sind, und die jeweils ein oberes, Gas enthaltendes Volumen (31B, 33B) haben, welche miteinander fluid-strömungsverbunden sind und welche mit dem Abgassystem (6) verbunden sind; wobei das Verfahren folgendes umfasst
- Erhöhen des Ölstands (51) in der zweiten Entgasungsvorrichtung (33) von einem vorbestimmten unteren Pegel (50B) auf einen vorbestimmten oberen Pegel (50A) durch Einfüllen von Öl, welches das obere Volumen (31A, 33A) für das Gas verkleinert und das Gas des oberen Volumens (31A, 33A) aus dem oberen Volumen (31A, 33A) durch das Abgassystem (6) drückt; - Verhinderung von Rückströmung von Gas aus dem Abgassystem (6) in das obere Volumen (31A, 33A);
- wenn der Ölstand den vorbestimmten oberen Pegel (50A) erreicht, Vergrößerung des oberen Volumens (31A, 33A) durch Senkung des Ölstands (51) in der zweiten Entgasungsvorrichtung auf den unteren vorgegebenen Pegel (50B) um dadurch Gas aus dem oberen Volumen (31A) der ersten Entgasungsvorrichtung (31) in das obere Volumen (33A) der zweiten Entgasungsvorrichtung (33) zu ziehen und das Gas in dem oberen Volumen (31A, 33A) der ersten und der zweiten Entgasungseinrichtungen (31, 33) zum Expandieren zu zwingen und dadurch den Gasdruck zu verringern; und
- Benutzung des verringerten Gasdrucks für zusätzliche Extraktion der Gasblasen und Wasser aus dem Öl in der ersten und zweiten Entgasungsvorrichtung (31, 33).

2. Verfahren nach Anspruch 1, wobei das Verfahren die Einleitung von Gas in das Öl umfasst, um Gasblasen während der Erhöhung des Ölstands (51) zu bilden, aber Stoppen der Einleitung von Gas in das Öl beim Absenken des Ölstandes (51).

3. Verfahren nach Anspruch 1 oder 2, wobei das Wasser enthaltende Öl in ein mit dem Einlass der Entgasungsvorrichtung (31) verbundenes Gefäß (39) eingebracht wird; wobei Strömen des Öls aus dem Gefäß (39) durch den Einlass (47) in die Entgasungsvorrichtung (31) veranlasst wird, wobei das Öl von einer ersten Ölpumpe (2) durch das Gefäß (39) bei einem Öldruck von mindestens 0,5 Barg in die Entgasungsvorrichtung (31) gepumpt wird.

4. Verfahren nach Anspruch 3, wobei der Druck des Gases über den Öldruck gebracht wird, bevor es in das Öl eingeleitet wird, um Gasblasen zu bilden.

5. Verfahren nach einem der vorherigen Ansprüche, wobei mit einer ersten Pumpe (2) Öl in die erste Entgasungsvorrichtung (31) gepumpt wird und mit einer zweiten Pumpe (34) das Öl aus der zweiten Entgasungsvorrichtung (33) extrahiert wird, um dadurch einen linearen Transport von Öl von der ersten Pumpe (2) zur ersten Entgasungsvorrichtung (31), von der ersten (31) zur zweiten (33) Entgasungsvorrichtung und aus der zweiten Entgasungsvorrichtung (33) zu der zweiten Pumpe (34) zu veranlassen.

6. Verfahren nach einem der vorherigen Ansprüche, wobei das Anheben und Senken des Ölstands zur Druckreduzierung nur in der zweiten Entgasungsvorrichtung (33) erfolgt.

7. Verfahren nach Anspruch 5 oder 6, wobei das Öl zum Fließen von der zweiten Pumpe (34) zu der ersten Pumpe (2) zur mehrfaches Umwälzung des Öls durch die Entgasungsvorrichtung (31, 33) veranlasst wird; und wobei Anheben und Absenken des Ölstandes (51) zwischen dem oberen Pegel (50A) und dem unteren Pegel (50B) im Wechsel während der Rückführung wiederholt wird.

8. Verfahren nach Anspruch 7, wobei ein kontinuierlicher Ölfluss durch die Entgasungsvorrichtung (31, 33) verursacht wird und die Durchflussrate aus der ersten Pumpe (2) und der zweiten Pumpe (34) im Wechsel differentiell eingestellt wird, so dass die Durchflussrate von der zweiten Pumpe (34) relativ zur ersten Pumpe (2) wiederholt von höher zu niedriger gewechselt wird, wobei der Wechsel dadurch verursacht wird, dass der Ölstands (51) jeweils den unteren Pegel (50B) und den oberen Pegel (50A) erreicht.

9. Verfahren nach einem der vorhergehenden Ansprüche, wobei die erste Entgasungseinrichtung (31, 33) eine Hindernis-Komponente (32, 52) beinhaltet, und das Öl dazu veranlasst wird zumindest einen Teil der Hindernis-Komponente (32, 52) während des Fließens in einer Aufwärtsrichtung (40) zu passieren und das Öl dadurch um diesen zumindest Teil der Hindernis-Komponente (32, 52) ausgebreitet wird, so dass sich die Oberfläche des Öls erhöht

10. Verfahren nach einem der vorhergehenden Ansprüche, wobei das Verfahren die Einführung des Wasser enthaltenden Öls in ein mit einem Einlass (47) der Entgasungsvorrichtung (31, 33) fluid-strömungsverbundenes Gefäß (39) umfasst; wodurch das Öl dazu veranlasst wird aus dem Gefäß (39) durch den Einlass (47) in die Entgasungsvorrichtung (31) zu fließen, wobei der Querschnitt der Entgasungsvorrichtung (31, 33) unmittelbar stromabwärts des Einlasses (47) größer ist als der Querschnitt des Einlasses (47); wobei das Verfahren das Einbringen von Gas in das Öl umfasst um Gasblasen in dem Gefäß stromaufwärts des Einlasses (47) zu bilden.

11. Verfahren nach Anspruch 10, wobei nach dem Einleiten des Gases in das Öl, das mit Gas angereicherte Öl einen sich verjüngenden Bereich (37) passiert, wo der Querschnitt der Strömung reduziert wird bevor das mit Gas angereicherte Öl in die Entgasungsvorrichtung (31, 33) eintritt.

12. Vorrichtung für ein Verfahren nach einem der vorhergehenden Ansprüche, wobei die Vorrichtung folgendes umfasst:
- eine erste (31) und eine zweite (33) Entgasungsvorrichtung, die jeweils ein unteres, Öl enthaltendes Volumen (31A, 33A) haben, welche miteinander fluid-strömungsverbunden sind, und die jeweils ein oberes, Gas enthaltendes Volumen (31B, 33B) haben, welche miteinander fluid-strömungsverbunden sind;
- ein Abgassystem (6), das mit dem oberen Volumen (31A, 33A) verbunden ist und mit einem Einweg-Mechanismus (55) lediglich für einen Einweg-Transport von Gas weg von der Entgasungseinrichtung (31, 33) versehen ist;
- eine erste Pumpe (2) zur Einführung von Öl in die erste Entgasungsvorrichtung (31) und eine zweite Pumpe (34) zur Extraktion von Öl aus der zweiten Entgasungsvorrichtung (33), um dadurch einen linearen Transport von Öl aus der ersten Pumpe (2) zur ersten Entgasungsvorrichtung (31), von der ersten (31) zur dem zweiten (33) Entgasungsvorrichtung und aus der zweiten Entgasungsvorrichtung (33) zur zweiten Pumpe zu veranlassen(34);
- einen oberen Schalter (50A) und einen unteren Schalter (50B) in der zweiten Entgasungsvorrichtung (33) zum jeweiligen Erfassen eines oberen und unteren Ölstands in der zweiten Entgasungsvorrichtung (33), wobei der obere (50A) und untere Schalter (50B) funktional mit Niveaueinstellungsmittel funktionell verbunden sind, wobei die Niveaueinstellungsmittel auch mit der ersten Pumpe (2) und der zweiten Pumpe (34) funktionell verbunden sind und dazu programmiert sind den Ölstand zwischen den beiden Schaltern (50A und 50B) alternierend zu heben und zu senken durch differentielle Einstellung der Strömungsrate der ersten (2) und die zweite Pumpe (34);
- eine Gasversorgung um Gas in das Öl einzubringen und Gasblasen zu bilden, die durch das Öl in der Entgasungsvorrichtung (31, 33) aufwärts steigen, während die Gasblasen Wasserdampf absorbieren, der zusammen mit dem Gas in den Blasen in das obere Volumen (31A, 33A) abgegeben wird zur Freigabe aus der Entgasungsvorrichtung (31, 33) durch das Abgassystem (6).

13. Vorrichtung nach Anspruch 12, wobei die unteren Volumina (31A, 33A) der ersten (31) und der zweiten (33) Entgasungsvorrichtung durch eine Ölleitung (46, 49) miteinander verbunden sind, wobei die Ölleitung (46, 49) ein Rohrausgang (54) über dem oberen Ölpegel (50A) in der zweiten Entgasungsvorrichtung (33) hat, wobei der Rohrausgang (54) auf Ebene mit dem Ölstand in der ersten Entgasungsvorrichtung (31) liegt.

14. Vorrichtung nach Anspruch 12 oder 13, ferner umfassend ein Gefäß (39), das mit einer ersten Pumpe (2) für den Transport (38) von Öl zu einem Einlass (47) der ersten Entgasungsvorrichtung (31) fluid-strömungsverbunden ist; wobei der Querschnitt der ersten Entgasungsvorrichtung (31) größer ist als der Querschnitt des Einlasses (47); eine Gasversorgung (15) in dem Gefäß (39) zur Zuführung von Gas zum Öl um Gasblasen im Öl zu erzeugen; wobei die Pumpe (2) zum Pumpen von Öl in das Gefäß (39) in Richtung des Einlasses (47) der ersten Entgasungsvorrichtung (31) bei einem Druck über Atmosphärendruck konfiguriert ist.

15. Vorrichtung nach einem der Ansprüche 12-14, wobei die Gasversorgung (15) an einer ersten Position in dem Gefäß (39) vorgesehen ist, wobei das Gefäß (39) einen ersten Querschnitt aufweist, wobei
- entweder das Gefäß (39) stromabwärts des ersten Querschnitt eine Verjüngung (37) mit einem zweiten Querschnitt hat,
- oder der erste Querschnitt größer ist als der Querschnitt des Einlasses (47),
- oder beides.

16. Vorrichtung nach einem der Ansprüche 12-15, wobei eine Hindernis-Komponente (32) in der ersten Entgasungsvorrichtung (31) vorgesehen ist; wobei die Hindernis-Komponente (32) zur Erhöhung der Oberfläche des Öls konfiguriert ist, indem das Öl sich um die Hindernis-Komponente (32) ausbreitet, wenn das Öl die Hindernis-Komponente in einer Strömung (40) durch die erste Entgasungsvorrichtung (31) passiert; wobei die Hindernis-Komponente (32) ein oberes Ende (32A) und ein unteres Ende (32B) aufweist, wobei der Einlass (47) unterhalb des oberen Endes (32A) der Hindernis-Komponente (32) vorgesehen ist zum Fließen des Öls vom Einlass (47) und zumindest an einen Teil des Hindernis-Komponente (32) vorbei während des Fließens in einer Aufwärtsrichtung (40) durch die ersten Entgasungsvorrichtung (31).

## Revendications

1. Procédé pour séparer l'eau de l'huile, le procédé comprenant les étapes consistant à :
- introduire de l'huile qui contient de l'eau dans un dispositif de dégazage (31, 33), dans lequel le dispositif de dégazage (31, 33) contient un volume supérieur (31A, 33A) rempli de gaz et un volume inférieur (33B) rempli d'huile jusqu'à un niveau d'huile (51),
- introduire du gaz dans l'huile pour former des bulles de gaz s'élevant à travers l'huile dans le dispositif de dégazage (31, 33), tandis que les bulles de gaz absorbent de la vapeur d'eau qui, ensemble avec le gaz dans les bulles, est libérée vers le volume supérieur (31A, 33A) en vue d'une décharge hors du dispositif de dégazage (31, 33) à travers un système d'évacuation (6) relié au volume supérieur (31A, 33A), **caractérisé en ce que** le dispositif de dégazage (31,33) comprend un premier (31) et un second (33) dispositif de dégazage, ayant chacun un volume inférieur (31B, 33B) contenant de l'huile et étant mutuellement reliés en écoulement fluidique, et ayant chacun un volume supérieur (31A, 33A) contenant du gaz et étant mutuellement reliés en écoulement fluidique et reliés au système d'évacuation (6) ; dans lequel le procédé comprend les étapes consistant à :
- élever le niveau d'huile (51) dans le second dispositif de dégazage (33) depuis un niveau inférieur prédéterminé (50B) jusqu'à un niveau supérieur prédéterminé (50A) en ajoutant de l'huile, ce qui réduit le volume supérieur (31A, 33A) pour le gaz et comprime le gaz du volume supérieur (31A, 33A) et le fait sortir du volume supérieur (31A, 33A) à travers le système d'évacuation (6) ;
- empêcher le reflux du gaz du système d'évacuation (6) dans le volume supérieur (31A, 33A) ;
- quand le niveau d'huile atteint le niveau supérieur prédéterminé (50A), augmenter le volume supérieur (31A, 33A) en abaissant le niveau d'huile (51) dans le second dispositif de dégazage jusqu'au niveau inférieur prédéterminé (50B) et extraire ainsi le gaz du volume supérieur (31A) du premier dispositif de dégazage (31) pour le faire entrer dans le volume supérieur (33A) du second dispositif de dégazage (33) et amener de force le gaz dans les volumes supérieurs (31A, 33A) des premier et second dispositifs de dégazage (31, 33) pour qu'il se dilate, et ainsi diminuer la pression du gaz ; et
- utiliser la pression du gaz réduite pour réaliser une extraction supplémentaire des bulles de gaz et de l'eau de l'huile dans les premier et second dispositifs de dégazage (31, 33).

2. Procédé selon la revendication 1, dans lequel le procédé comprend l'introduction de gaz dans l'huile pour former des bulles de gaz pendant l'élévation du niveau d'huile (51), mais l'interruption de l'introduction de gaz dans l'huile pendant l'abaissement du niveau d'huile (51).

3. Procédé selon la revendication 1 ou 2, dans lequel le procédé comprend les étapes consistant à introduire de l'huile qui contient de l'eau dans un récipient (39) qui est relié en écoulement fluidique à une entrée (47) du dispositif de dégazage (31) ; causer l'écoulement de l'huile depuis le récipient (39) à travers l'entrée (47) jusque dans le dispositif de dégazage (31), dans lequel l'huile est pompée par une première pompe à huile (2) à travers le récipient (39) à une pression de l'huile dans le récipient (39) d'au moins 0,5 Barg et introduite par pompage dans le dispositif de dégazage (31).

4. Procédé selon la revendication 3, dans lequel le procédé comprend la mise sous pression du gaz au-dessus de la pression de l'huile avant d'introduire le gaz dans l'huile pour former des bulles de gaz.

5. Procédé selon une quelconque revendication précédente, dans lequel le procédé comprend le pompage d'huile dans le premier dispositif de dégazage (31) à l'aide d'une première pompe (2) et l'extraction de l'huile du second dispositif de dégazage (33) à l'aide d'une seconde pompe (34), pour causer ainsi un transport linéaire d'huile de la première pompe (2) au premier dispositif de dégazage (31), du premier (31) au second (33) dispositif de dégazage, et du second dispositif de dégazage (33) à la seconde pompe (34).

6. Procédé selon une quelconque revendication précédente, dans lequel l'élévation et l'abaissement du niveau d'huile pour créer une réduction de pression sont réalisés dans le second dispositif de dégazage (33) uniquement.

7. Procédé selon la revendication 5 ou 6, dans lequel le procédé comprend les étapes consistant à causer l'écoulement de l'huile de la seconde pompe (34) à la première pompe (2) et ainsi, la recirculation de l'huile un certain nombre de fois à travers le dispositif de dégazage (31, 33) ; pendant la recirculation, élever et abaisser de manière répétée le niveau d'huile (51) entre le niveau supérieur (50A) et le niveau inférieur (50B) en alternance.

8. Procédé selon la revendication 7, dans lequel le procédé comprend les étapes consistant à causer un écoulement continu d'huile à travers le dispositif de dégazage (31, 33) et à procéder à un réglage différentiel du débit de la première pompe (2) et de la seconde pompe (34) en alternance de telle sorte que le débit de la seconde pompe (34) est décalé de manière répétée de supérieur à inférieur à celui de la première pompe (2), le décalage étant causé par le fait que le niveau d'huile (51) atteint le niveau inférieur (50B) et le niveau supérieur (50A), respectivement.

9. Procédé selon une quelconque revendication précédente, dans lequel le premier dispositif de dégazage (31, 33) contient un composant d'obstruction (32, 52) dedans, et le procédé comprend l'étape consistant à faire passer l'huile par au moins une partie du composant d'obstruction (32, 52) pendant l'écoulement dans une direction ascendante (40) et ainsi à étaler l'huile autour de l'au moins une partie du composant d'obstruction (32, 52) de telle sorte que la surface de l'huile est augmentée.

10. Procédé selon une quelconque revendication précédente, dans lequel le procédé comprend les étapes consistant à introduire de l'huile qui contient de l'eau dans un récipient (39) qui est relié en écoulement fluidique à une entrée (47) du dispositif de dégazage (31) ; causer l'écoulement de l'huile depuis le récipient (39) à travers l'entrée (47) dans le dispositif de dégazage (31), dans lequel la section transversale du dispositif de dégazage (31) immédiatement en aval de l'entrée (47) est supérieure à la section transversale de l'entrée (47) ; dans lequel le procédé comprend l'introduction de gaz dans l'huile pour former des bulles de gaz dans le récipient en amont de l'entrée (47).

11. Procédé selon la revendication 10, dans lequel le procédé comprend, après l'introduction de gaz dans l'huile, l'étape consistant à faire passer l'huile enrichie en gaz à travers une région de rétrécissement (37) où la section transversale de l'écoulement est réduite avant que l'huile enrichie en gaz n'entre dans le dispositif de dégazage (31).

12. Appareil pour un procédé selon une quelconque revendication précédente, l'appareil comprenant :
- un premier (31) et un second (33) dispositif de dégazage, ayant chacun un volume inférieur (31B, 33B) contenant de l'huile et étant mutuellement reliés en écoulement fluidique, et ayant chacun un volume supérieur (31A, 33A) contenant du gaz et étant mutuellement reliés en écoulement fluidique ;
- un système d'évacuation (6) relié au volume supérieur (31A, 33A) et comprenant un mécanisme unidirectionnel (55) pour un transport de gaz dans une seule direction, le sens unique étant opposé au dispositif de dégazage (31, 33) ;
- une première pompe (2) pour introduire de l'huile dans le premier dispositif de dégazage (31) et une seconde pompe (34) pour extraire de l'huile du second dispositif de dégazage (33) pour causer ainsi un transport linéaire d'huile de la première pompe (2) au premier dispositif de dégazage (31), du premier (31) au second (33) dispositif de dégazage, et du second dispositif de dégazage (33) à la seconde pompe (34).
- un interrupteur supérieur (50A) et un interrupteur inférieur (50B) dans le second dispositif de dégazage (339) pour détecter un niveau supérieur et inférieur d'huile, respectivement, dans le second dispositif de dégazage (33), dans lequel l'interrupteur supérieur (50A) et inférieur (50B) sont reliés fonctionnellement à un moyen de réglage de niveau, le moyen de réglage de niveau étant également fonctionnellement relié à la première pompe (2) et à la seconde pompe (34) et programmé pour élever et abaisser le niveau d'huile entre les deux interrupteurs (50A et 50B) en alternance en procédant à un réglage différentiel du débit de la première (2) et de la seconde pompe (34) ;
- une alimentation en gaz pour introduire du gaz dans l'huile pour former des bulles de gaz s'élevant à travers l'huile dans le dispositif de dégazage (31, 33), tandis que les bulles de gaz absorbent de la vapeur d'eau qui, ensemble avec le gaz dans les bulles, est libérée dans le volume supérieur (31A, 33A) en vue d'une décharge hors du dispositif de dégazage (31, 33) à travers le système d'évacuation (6).

13. Appareil selon la revendication 12, dans lequel les volumes inférieurs (31A, 33A) du premier (31) et du second (33) dispositif de dégazage sont mutuellement reliés par un tuyau d'huile (46, 49), dans lequel le tuyau d'huile (46, 49) a une sortie de tube (54) au-dessus du niveau supérieur d'huile (50A) dans le second dispositif de dégazage (33), la sortie de tube (54) étant à niveau avec le niveau d'huile dans le premier dispositif de dégazage (31).

14. Appareil selon la revendication 12 ou 13, comprenant en outre un récipient (39) relié en écoulement fluidique à une première pompe (2) en vue d'un transport (38) d'huile vers une entrée (47) du premier dispositif de dégazage (31) ; dans lequel la section transversale du premier dispositif de dégazage (31) est supérieure à la section transversale de l'entrée (47) ; une alimentation en gaz (15) prévue dans le récipient (39) pour ajouter du gaz à l'huile pour créer des bulles de gaz dans l'huile ; dans lequel la pompe (2) est configurée pour pomper de l'huile dans le récipient (39) vers l'entrée (47) du premier dispositif de dégazage (31) à une pression supérieure à la pression atmosphérique.

15. Appareil selon l'une quelconque des revendications 12 à 14, dans lequel l'alimentation en gaz (15) est prévue au niveau d'une première position dans le récipient (39) où le récipient (39) a une première section transversale, dans lequel
- soit le récipient (39) a un rétrécissement (37) avec une seconde section transversale, inférieure à la première section transversale, en aval de la première section transversale,
- soit la première section transversale est supérieure à la section transversale de l'entrée (47),
- soit les deux.

16. Appareil selon l'une quelconque des revendications 12 à 15, dans lequel un composant d'obstruction (32) est prévu dans le premier dispositif de dégazage (31) ; le composant d'obstruction (32) étant configuré pour augmenter la surface de l'huile en étalant l'huile autour du composant d'obstruction (32) quand l'huile passe par le composant d'obstruction en un écoulement (40) à travers le premier dispositif de dégazage (31) ; le composant d'obstruction (32) comprenant une extrémité supérieure (32A) et une extrémité inférieure (32B), dans lequel l'entrée (47) est prévue au-dessous de l'extrémité supérieure (32A) du composant d'obstruction (32) en vue d'un écoulement de l'huile depuis l'entrée (47) et d'un passage par au moins une partie du composant d'obstruction (32) pendant l'écoulement dans une direction ascendante (40) à travers le premier dispositif de dégazage (31).
